(19) Europäisches Patentamt
European Patent Office
Office européen des brevets

(11) Veröffentlichungsnummer: **0 218 206 B1**

(12) # EUROPÄISCHE PATENTSCHRIFT

(45) Veröffentlichungstag der Patentschrift: **07.02.90**

(51) Int. Cl.[4]: **C09B 35/28**, C08K 5/23, C09D 11/00, C09D 17/00

(21) Anmeldenummer: **86113638.0**

(22) Anmeldetag: **02.10.86**

(54) **Disazopigmente mit einem Piperazin-Brückenglied.**

(30) Priorität: **10.10.85 DE 3536196**

(43) Veröffentlichungstag der Anmeldung: **15.04.87 Patentblatt 87/16**

(45) Bekanntmachung des Hinweises auf die Patenterteilung: **07.02.90 Patentblatt 90/6**

(84) Benannte Vertragsstaaten: **CH DE FR GB IT LI**

(56) Entgegenhaltungen: **DE-A- 2 539 162**

(73) Patentinhaber: **BASF Aktiengesellschaft, Carl-Bosch-Strasse 38, D-6700 Ludwigshafen(DE)**

(72) Erfinder: **Colberg, Horst, Dr., Tilsiter Strasse 9, D-6707 Schifferstadt(DE)**
Erfinder: **Hahn, Erwin, Dr., Am Büchsenackerhang 31, D-6900 Heidelberg(DE)**

**EP 0 218 206 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft sulfonsäuregruppenfreie Verbindungen der allgemeinen Formel I

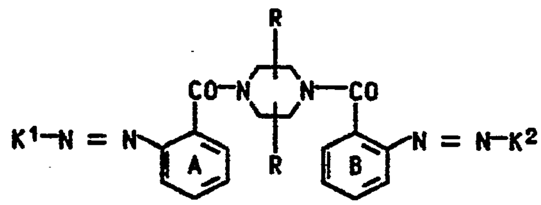

(I)

in der
R Wasserstoff oder $C_1$- bis $C_4$-Alkyl und
$K^1$ und $K^2$ unabhängig voneinander Reste von Kupplungskomponenten sind und in der die Ringe A und B noch ein- oder mehrfach durch Fluor, Chlor, Brom, Nitro, Methyl, Trifluormethyl, Ethyl, Acetyl, Benzoyl, Carbonester, gegebenenfalls substituiertes Carbamoyl oder Sulfamoyl, Sulfonsäurearylester, $C_1$- bis $C_4$-Alkylsulfonyl, gegebenenfalls substituiertes Phenylsulfonyl, Cyan oder Acylamino oder einen anellierten Ring substituiert sein können.

Einzelne Substituenten für die Ringe A und B sind neben den bereits genannten z.B.: $COOCH_3$, $COOC_2H_5$, $COOC_3H_7$, $COOCH(CH_3)_2$, $COOC_4H_9$, $COOC_6H_5$, $COOC_6H_{13}$, $COOC_8H_{17}$, $COOC_2H_4OCH_3$, $COOC_2H_4OC_2H_5$, $COOCH_2C_6H_5$, $CONH_2$, $CONHCH_3$, $CONHC_2H_5$, $CONHC_3H_7$, $CONHC_4H_9$, $CONHCH(CH_3)_2$, $CONHCH_2C_6H_5$, $CONHC_6H_5$, $CONHC_6H_4Cl$, $CONHC_6H_3Cl_2$, $CONHC_6H_2Cl_3$, $CONHC_6H_4Br$, $CONHC_6H_4OCH_3$, $CONHC_6H_4CH_3$, $CONHC_6H_4OC_2H_5$, $CONHC_6H_3Cl(OCH_3)$, $CONHC_6H_4NHCOCH_3$, $CONHC_6H_4NHCOC_6H_5$, CONHNHCOC6H5, CONHNHCOC6H4Cl, CONHNHCOC6H4CH3, $SO_2NH_2$, $SO_2NHCH_3$, $SO_2NHC_2H_5$, $SO_2NHC_3H_7$, $SO_2NHC_4H_9$, $SO_2NHCH(CH_3)_2$, $SO_2NHCH_2C_6H_5$, $SO_2NHC_6H_5$, $SO_2NHC_6H_4Cl$, $SO_2NHC_6H_3Cl_2$, $SO_2NHC_6H_2Cl_3$, $SO_2NHC_6H_4Br$, $SO_2NHC_6H_4OCH_3$, $SO_2NHC_6H_4CH_3$, $SO_2NHC_6H_4OC_2H_5$, $SO_2NHC_6H_3Cl(OCH_3)$, $SO_2NHC_2H_4NHCOCH_3$, $SO_2NHC_2H_4NHCOC_2H_5$, $SO_2NHNHCOC_6H_5$, $SO_2NHNHCOC_6H_4Cl$, $SO_2NHNHCOC_6H_4CH_3$, $SO_2OC_6H_5$, $SO_2OC_6H_4CH_3$, $SO_2OC_6H_4Cl$, $SO_2OC_6H_4Br$, $SO_2OC_6H_4OCH_3$, $SO_2OC_6H_4NHCOCH_3$, $SO_2OC_6H_3Cl_2$, $SO_2CH_3$, $SOCH_3$, SO2C2H5, $SO_2C_6H_5$, $SO_2C_6H_4Cl$, $NHCOCH_3$, $NHCOC_2H_5$, $NHCOC_6H_5$, $NHCONH_2$, $NHCON(CH_3)_2$ oder $NHCONHC_6H_5$.

Als Kupplungskomponenten $K^1H$ bzw. $K^2H$ kommen z.B. Verbindungen der Phenol-, Naphthol-, Acetoacetarylid-, Pyrazolon-, Chinolon-, Pyridin-, Pyrimidin-, Isochinolin- oder Pyrazolo[5,1b]chinazolonreihe in Betracht. Neben Phenol, o-, m- oder p-Kresol, 1-Naphthol, 2-Naphthol oder Resorcin entsprechen sie im wesentlichen den Formeln:

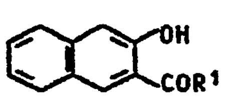, $CH_3COCH_2CONHR^2$, 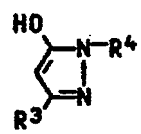, 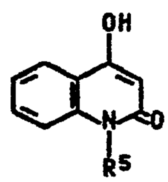, 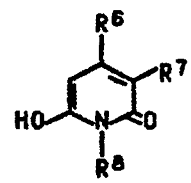,

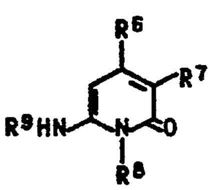, 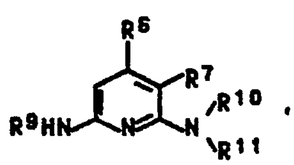, 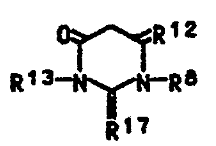, 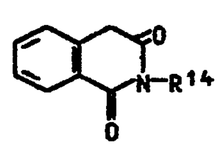 oder

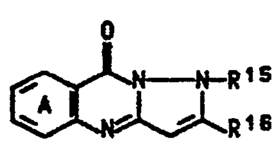,

in denen
$R^1$ $C_1$- bis $C_4$-Alkoxy, gegebenenfalls substituiertes Phenoxy oder gegebenenfalls substituiertes Arylamino,
$R^2$ gegebenenfalls substituiertes Aryl,
$R^3$ Wasserstoff, Methyl, Carboxyl, $C_1$- bis $C_8$-Alkoxycarbonyl, gegebenenfalls substituiertes Carbamoyl oder die für $R^2$ angegebenen Substituenten,

$R^4$ Wasserstoff oder die für $R^2$ angegebenen Substituenten,
$R^5$ Wasserstoff oder $C_1$- bis $C_{13}$-Alkyl,
$R^6$ Wasserstoff, Hydroxy, gegebenenfalls substituiertes Amino oder $C_1$- bis $C_4$-Alkyl,
$R^7$ Wasserstoff, Cyan, Carbamoyl, Acetyl oder Benzoyl,
$R^8$ und $R^{13}$ unabhängig voneinander Wasserstoff oder gegebenenfalls substituiertes Alkyl, Cycloalkyl, Phenyl oder Benzyl,
$R^9$, $R^{10}$ und $R^{11}$ unabhängig voneinander Wasserstoff oder gegebenenfalls substituiertes Alkyl, Cycloalkyl oder Phenyl, wobie $R^{10}$ und $R^{11}$ auch mit dem Stickstoff zusammen einen heterocyclischen Fünf- oder Sechsring
bilden können,
$R^{12}$ und $R^{17}$ unabhängig voneinander Sauerstoff, Imino oder Cyanimino,
$R^{14}$ ein Rest $R^8$ oder Amino oder Acylamino,
$R^{15}$ Wasserstoff oder gegebenenfalls substituiertes Phenyl und
$R^{16}$ Hydroxy, Methyl, Carbonester oder gegebenenfalls substituiertes Aryl oder Acylamino sind und der Ring A wie angegeben substituiert sein kann.

Im einzelnen sind für die Rest $R^1$ bis $R^{16}$ neben den bereits aufgeführten z.B. folgende Substituenten zu nennen:

$R^1$ $OCH_3$, $OC_2H_5$, $OC_6H_5$, $OC_6H_4Cl$, $OC_6H_3Cl_2$, $NHC_6H_5$, $NHC_6H_4Cl$, $NHC_6H_3Cl_2$, $NHC_6H_2Cl_3$, $NHC_6H_3Cl(CH_3)$, $NHC_6H_4CH_3$, $NHC_6H_4C_2H_5$, $NHC_6H_3(OCH_3)_2$, $NHC_6H_3(CH_3)(OCH_3)$, $NHC_6H_3(CH_3)_2$, $NHC_6H_2(OCH_3)_2Cl$, $NHC_6H_2(OCH_3)(CH_3)Cl$, $NHC_6H_3Cl(OCH_3)$, $NHC_6H_4NHCOCH_3$, $NHC_6H_4NHCOC_6H_5$, $NHC_6H_4OC_2H_5$,

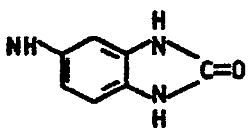,
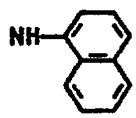,
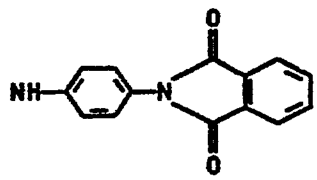

oder $NHC_6H_3(OC_2H_5)_2$;

$R^2$ $C_6H_5$, $C_6H_4Cl$, $C_6H_4CH_3$, $C_6H_4OCH_3$, $C_6H_4OC_2H_5$, $C_6H_4NHCOCH_3$, $C_6H_4NHCOC_6H_5$, $C_6H_3Cl_2$, $C_6H_3(CH_3)_2$, $C_6H_3(OCH_3)_2$, $C_6H_3(OC_2H_5)_2$, $C_6H_3Cl(CH_3)$, $C_6H_3Cl(OCH_3)$, $C_6H_3(CH_3)$, $(OCH_3)$ $C_6H_2Cl_3$, $C_6H_2(OCH_3)_2Cl$, $C_6H_2(OCH_3)Cl(CH_3)$,

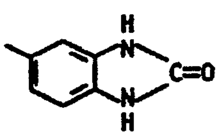,
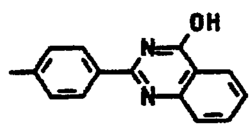,
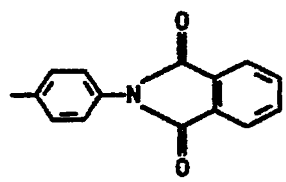,
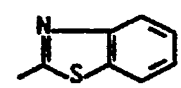,

$C_6H_4NO_2$, $C_6H_4COCH_3$ oder $C_6H_4COC_6H_5$;

$R^3$ $COOCH_3$, $COOC_2H_5$, $COOC_3H_7$, $COOC_4H_9$, $CONH_2$, $CONCH_3$, $CONCH_3$, $CONHC_2H_5$, $CONHC_2H_5$, $CONHC_3H_7$ oder $CONHC_4H_9$;

$R^5$ $CH_3$, $C_2H_5$, $C_3H_7$, $C_4H_9$, $C_6H_{13}$, $C_8H_{17}$, $C_{12}H_{25}$ oder $C_{13}H_{27}$;

$R^6$ $CH_3$, $C_2H_5$, $C_3H_7$, $C_4H_9$, $C_5H_{11}$, α-Ethylphenyl, Phenyl, Methylphenyl oder Chlorphenyl;

$R^8$, $R^{13}$: Methyl, Ethyl, Propyl, Butyl, β-Hydroxyethyl, β-Methoxyethyl, γ-Methoxypropyl, β-Cyanethyl, β-Carbomethoxyethyl, β-Carboethoxyethyl, β-Acetoxyethyl, β-Ethoxycarbonylethyl, γ-Acetylaminopropyl, Phenoxycarbonyloxyethyl, Phenylaminocarbonyloxyethyl, Butylaminocarbonyloxyethyl, Benzyl, β-Phenethyl, Phenyl, Dichlorphenyl, Trichlorphenyl, Acetylaminophenyl, Carboxyphenyl, Cyanphenyl, Chlorphenyl, Sulfethyl, Pentyl, Hexyl, Octyl, Nonyl, Decyl, Dodecyl, Tridecyl, Methylphenyl, Dimethylphenyl, Methylchlorphenyl, Methoxyphenyl, Heptyl, Tetradecyl, Hexadecyl, Octadecyl, Eicosyl, Docosyl, Oleyl oder weitere Reste von technischen Fettaminen, wie Kokosfettamin oder Talgfettamin oder deren Hydrierungsprodukte; weiterhin sind aminosubstituierte Alkylreste wie $C_1$- bis $C_{18}$-mono- oder dialkylaminosubstituiertes Alkyl, Cycloalkylaminoalkyl, Aralkylaminoalkyl oder N-heterocyclisch substituiertes Alkyl zu nennen, wobei diese Aminoalkylreste auch quartär sein können. Bevorzugt hat der Alkylrest 2 oder 3 C-Atome, d.h. er entspricht der Formel $C_2H_4$ oder insbesondere $C_3H_6$. Einzelne Reste sind z.B.

$C_2H_4N(CH_3)_2$, $C_2H_4N(C_2H_5)_2$, $C_2H_4N(C_3H_7)_2$, $C_2H_4N(C_4H_9)_2$,

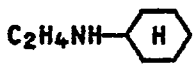 , 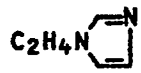 ,

$C_3H_6N(CH_3)_2$ $C_3H_6\overset{\oplus}{N}(CH_3)_3$

$C_3H_6N(C_2H_5)_2$ $C_3H_6\overset{\oplus}{N}(CH_3)_2\ (C_2H_4OH)$

$C_3H_6N(C_3H_7)_2$ n und iso 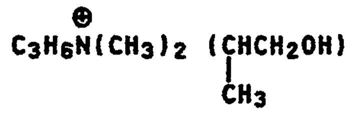

$C_3H_6N(C_4H_9)_2$ $C_3H_6\overset{\oplus}{N}(CH_3)(C_2H_5)_2$

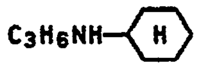 $C_3H_6\overset{\oplus}{N}(CH_3)(C_3H_7)_2$

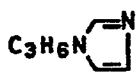 $C_3H_6\overset{\oplus}{N}(CH_3)(C_4H_9)_2$

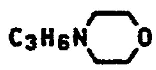 $C_3H_6\overset{\oplus}{N}(C_2H_5)_2(C_2H_4OH)$

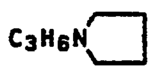 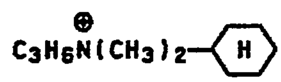

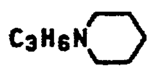 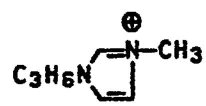

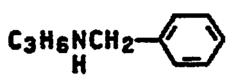 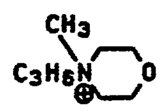

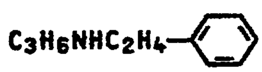

$C_3H_6NHC_3H_6OCH_3$

$C_3H_6NHC_2H_4OCH_3$

$C_3H_6NHC_{12}H_{25}$

$C_3H_6NHC_{18}H_{35}$

$C_3H_6NHC_{18}H_{37}$

$C_3H_6NHC_{14}H_{29}$

$C_3H_6NHC_{16}H_{33}$

$C_3H_6N(C_{18}H_{37})_2$

$R^9$, $R^{10}$, $R^{11}$: Alkyl mit 1 bis 8 C-Atomen, gegebenenfalls durch Hydroxy, Cyan, Alkoxy mit bis 8 C-Atomen, Phenoxy, Phenoxyethoxy oder Benzyloxy substituiertes $C_2$- bis $C_6$-Alkyl, Cyclohexyl, Benzyl, Phenylethyl, Phenylhydroxyethyl, Phenylpropyl, Phenylbutyl, gegebenenfalls durch Chlor, Methyl,

Methoxy oder Ethoxy substituiertes Phenyl, Polyalkoxyalkyl, Hydroxypolyalkoxyalkyl, Alkanoyloxyalkyl, Alkoxycarbonylalkyl, Alkanoyl, Aralkanoyl, Aroyl, Alkylsulfonyl oder Arylsulfonyl; z. B. die in der US-PS 3 998 802 genannten Reste;

$R^{14}$ $C_1$- bis $C_8$-Alkanoylamino, Benzoylamino oder Benzoylamino, das durch Hydroxy, Chlor, Methyl, Methoxy, Acetylamino, Nitro oder Amino ein-der zweifach substituiert ist;

$R^{15}$ Phenyl, Chlorphenyl, Dichlorphenyl, Trichlorphenyl, Bromphenyl, Dibromphenyl, Methoxyphenyl, Methylphenyl oder Dimethylphenyl;

$R^{16}$ $COOCH_3$, $COOC_2H_5$, Phenyl, die für $R^{15}$ genannten Reste, $NHCOCH_3$, $NHCOC_2H_5$, $NHCOC_3H_7$, $NHCOC_6H_5$, $NHCOC_6H_4Cl$, $NHCOC_6H_3Cl_2$, $NHCOC_6H_4Br$, $NHCOC_6H_4OCH_3$, $NHCONH_2$, $NHCONHC_6H_5$ oder $NHCOCONHC_6H_5$;

Weiter geeignete Kupplungskomponenten sind z.B.:

4-Hydroxycoumarin, 2-Acetonylbenzthiazol, 2-Cyanmethylbenzthiazol, 2-Cyanmethylbenzimidazol, 2-Cyanmethyl-4-hydroxychinazolin, 2-Hydroxychinoxalin, 2-Carbamoylbenzimidazol, 2-Acetonylbenzimidazol, 2-Phenyl-4-amino-6-hydroxypyrimidin, 4-Carbamoyl-2,6-dihydroxypyrimidin, 2,4-Dihydroxypyrimido[1,2-a]benzimidazol, 4-amino-2-hydroxy-pyrimido[1,2-a]benzimidazol, 2H-Pyrimido [2,1-b]benzothiazol-2,4(3H)-dion, 1,4-(Bisacetoacetamino)benzol oder 4,4' -Bis(acetoacetamino)-3,3'-dimethyldiphenyl.

Von besonderer Bedeutung sind Verbindungen der Formel Ia

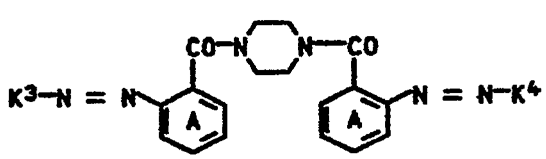

(Ia)

in der

$K^3$ und $K^4$ unabhängig voneinander Reste von Kupplungskomponenten der Acetoacetarylid-, Pyrazolon-, Chinolon-, Pyrimiodin-, Isochinolon- oder Pyrazolo [5,1b]-chinazolonreihe oder des 2-Naphthols und insbesondere Reste der Pyridin- oder 2-Naphthol-3-carbonsäurearylamidreihe sind, und die Phenylenreste A noch durch Chlor, Brom oder einfach oder mehrfach, auch gemischt, substituiert sein können.

Bevorzugt Reste $R^1$ bis $R^{16}$ sind dabei für

$R^1$ gegebenenfalls durch Chlor, Brom, Methyl, Methoxy, Ethoxy, Nitro, Cyan, Acetamino, Carbamoyl, Sulfamoyl einfach mehrfach oder auch gemischt substituiertes $NHC_6H_5$ oder

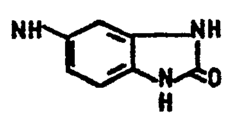

;

$R^2$ gegebenenfalls durch Chlor, Brom, Methyl, Methoxy, Ethoxy, Nitro, Cyan, Acetamino, Carbamoyl oder Sulfamoyl einfach, mehrfach oder auch gemischt substituiertes Phenyl;

$R^3$ Wasserstoff, Methyl, $C_1$- bis $C_4$-Alkoxycarbonyl, Carbamoyl, $C_1$- bis $C_4$-Alkylaminocarbonyl oder die für $R^2$ bevorzugten Reste;

$R^4$ Wasserstoff oder die für $R^2$ bevorzugten Reste;

$R^5$ Wasserstoff oder $C_1$- bis $C_8$-Alkyl;

$R^6$ Wasserstoff, Methyl, Hydroxy oder Amino;

$R^7$ Wasserstoff, Cyan, Carbamoyl, Acetyl oder Benzoyl;

$R^8$, $R^{13}$ unabhängig voneinander Wasserstoff, Alkyl, Alkenyl, Cycloalkyl, Benzyl oder ein Rest $R^2$;

$R^9$, $R^{10}$, $R^{11}$: unabhängig voneinander Wasserstoff, Alkyl, Cycloalkyl, Benzyl oder ein Rest $R^2$; $R^{10}$ und $R^{11}$ können mit dem Stickstoff auch einen 5- oder 6-Ring bilden;

$R^{12}$,$R^{17}$ unabhängig voneinander Sauerstoff, Imino oder Cyanimino;

$R^{14}$ ein Rest $R^8$ oder Acylamino;

$R^{15}$ Wasserstoff oder ein Rest $R^2$;

$R^{16}$ Methyl oder ein Rest $R^2$;

Zur Herstellung der Verbindungen der Formel (I) kann man eine Bis-diazoniumverbindung von Aminen der Formel (II)

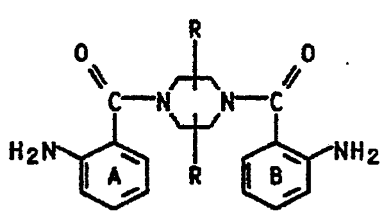

(II)

mit Kupplungskomponenten $HK^1$ und $HK^2$ umsetzen, wobei $HK^1$ und $HK^2$ gleich oder verschieden sein können.

Die Kupplungsprodukte (I) sind in der Regel Pigmente. Sie fallen nicht immer in der für den Verwendungszweck optimalen physikalischen Form an. Man kann sie jedoch durch an sich bekannte Methoden, wie Mahlung, gegebenenfalls in Gegenwart von Salzen oder Flüssigkeiten, Erhitzen in wäßriger Suspension bei geeigneten pH-Werten oder in Lösungsmitteln in eine geeignete Pigmentform überführen.

Eine weitere Möglichkeit, die anwendungstechnischen Eigenschaften der Pigmente zu verbessern, besteht in der an sich bekannten Belegung der Pigmente mit vorzugsweise strukturell ähnlichen Verbindungen. Zur Herstellung der Belegmittel ist es in der Regel zweckmäßig, die gleiche Diazokomponente zu verwenden und die Variation in der Kupplungskomponente vorzunehmen. Man kann dann bei der Pigmentherstellung von vornherein eine Mischung von Kupplungskomponenten verwenden, wobei die zum Belegmittel führende Kupplungskomponente in entsprechend geringen Mengen zugesetzt wird oder man synthetisiert die Belegmittel getrennt und setzt sie später dem Pigment zu.

Für die Herstellung von Druckfarben mit Pigmenten der Formel (I) kann es vorteilhaft sein, die Verteilbarkeit der Pigmente in der Druckfarbe durch vorherige Belegung mit Harzen zu verbessern. Die Belegung kann gleichzeitig mit der Kupplung, nach der Kupplung oder nach der Formierung vorgenommen werden.

Die Pigmente der Formel (I) zeichnen sich zum Teil durch hohe Farbstärke, Überlackierechtheit und Migrationsechtheit aus und kommen daher für die Herstellung von Druckfarben und Lacken und zur Einfärbung von Kunststoffen in Betracht.

Einzelheiten der Herstellung und Anwendung von Verbindungen der Formel (I) können den Beispielen entnommen werden, in denen sich Angaben über Teile und Prozente, sofern nicht anders vermerkt, auf das Gewicht beziehen.

Im folgenden ist der Rest

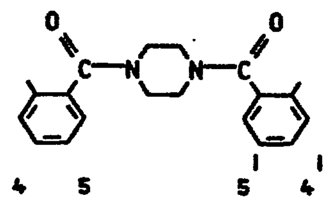

abgekürzt als DIAP<, substituierte Reste dann sinngemäß z.B. als (5,5'-Dibrom DIAP)<, bezeichnet.

Beispiele

Beispiel 1

32,4 Teile Dianthranilsäurepiperazid werden in 330 Teilen Wasser und 170 Teilen Eis angerührt, mit 70 Volumenteilen konz. Salzsäure versetzt und bei Raumtemperatur mit 64 Volumenteilen 23-proz. wäßriger Natriumnitritlösung diazotiert. Nach 3 Stunden wird der Nitritüberschuß mit Amidosulfonsäure zerstört. Anschließend gibt man die diazotierte Verbindung bei 0 °C allmählich zur mit Salzsäure auf pH 6 gestellten Lösung von 53,6 Teilen zunächst alkalisch gelöstem N-(2,5-Dimethoxy-4-chlorphenyl)-acetoacetimid in 600 Teilen Wasser. Die Kupplung wird bei Raumtemperatur und pH 6 zu Ende geführt, das Pigment abgesaugt und mit heißem Wasser gewaschen. Danach wird es in frischem Wasser angerührt und bei pH 10 und 98 °C 4 Stunden gerührt, abgesaugt, gewaschen und getrocknet. Man erhält 80 Teile gelbes Pigment. Die Verbindung entspricht der Formel

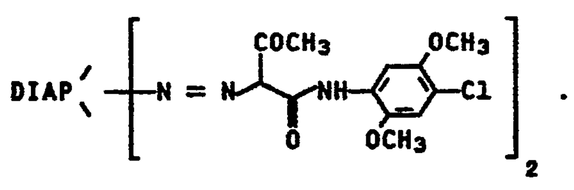

Beispiel 2

16,2 Teile Dianthranilsäurepiperazid werden in 200 Teilen Wasser angerührt, tropfenweise mit 60 Volumenteilen konz. Salzsäure versetzt und bei 5 °C mit 64 Volumenteilen 23-proz. wässriger Natriumnitritlösung diazotiert. Man rührt Raumtemperatur nach, bis eine klare Lösung entstanden ist, zerstört den Nitritüberschuß mit Amidosulfonsäure, filtriert, kühlt auf 0 °C, puffert mit Natriumacetat auf pH 2,5 und läßt die wie folgt hergestellt Kupplungskomponente zufließen. 50 Teile 2-Hydroxynaphthalin-3-carbonsäure-N-phenylamid und 1,4 Teile 2-Naphthol werden in 50 Teilen N-Methylpyrrolidon, 32 Teilen 50-proz. Natronlauge und 500 Teilen Wasser bei 45 °C gelöst und auf Raumtemperatur gekühlt. Man kuppelt bei 20 °C aus, saugt ab und wäscht mit Wasser. Der Filterkuchen wird in Wasser angerührt, mit Natriumcarbonat auf pH = 10 eingestellt und mit 200 Teilen einer 10-proz. natronalkalischen wässrigen Lösung von Colophonium versetzt. Man rührt 4 Stunden bei 95 °C, stellt auf pH 7 zurück, hält weitere 2 Stunden bei 95 °C, kühlt auf 60 °C ab, saugt ab, wäscht mit Wasser und trocknet bei 60 °C. Man erhält 103 g rotes Pigment. Die Hauptkomponente entspricht der Formel

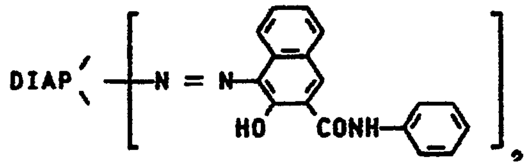

und die wesentliche Nebenkomponente der Formel

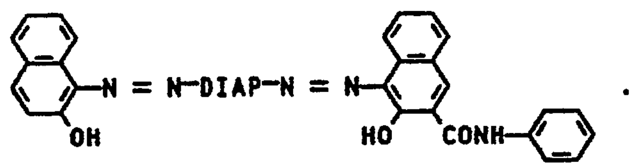

Beispiel 3

101 Teile Dianthranilsäurepiperazid werden in 600 Teilen Wasser unter Zusatz von 0,6 Teilen das Natriumsalzes einer Alkylnaphthalinsulfonsäure angerührt. Nach Zugabe von 180 Volumenteilen konz. Salzsäure wird 1 Stunde nachgerührt. Bei 5 °C wird mit 180 Volumenteilen einer 23-proz. wässrigen Lösung von Natriumnitrit diazotiert. Man läßt die Temperatur innerhalb von 3 Stunden auf 20 °C steigen, zerstört überschüssiges Nitrit mit Amidosulfonsäure und läßt die Lösung in die wie folgt hergestellt Suspension der Kupplungskomponente einfließen. 104,4 Teile 3-Methyl-1-phenyl-pyrazolon-5 werden in 600 Teilen Wasser und 360 Teilen 2N-Natronlauge gelöst, auf 0 °C gekühlt, mit Eisessig/Wasser 1:1 gefällt und anschließend mit 208 Teilen einer 10-proz. natronalkalischen Lösung von Colophonium versetzt. Zum Auskuppeln wird durch Zusatz von Natriumacetat pH 4 eingestellt. Nach dem Rühren über Nacht wird abgesaugt und gewaschen. Man trägt den feuchten Preßkuchen in Wasser ein, stellt mit verd. Salzsäure pH 1,2 ein und rührt 4 Stunden bei 95 °C. Nach dem Absaugen, Waschen und einer Schranktrocknung bei 60 °C erhält man 272 Teile gelbes Pigment. Die Verbindung entspricht der Formel

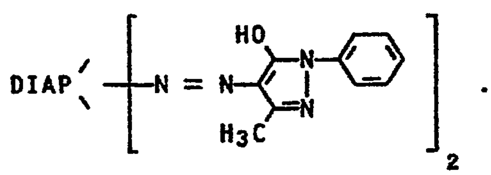

Beispiel 4

32,4 Teile Dianthranilsäurepiperazid werden in 120 Teilen Wasser unter Zusatz von 0,2 Teilen des Natriumsalzes einer Alkylnaphthalinsulfonsäure angerührt. Nach Zugabe von 50 Volumenteilen 30-proz. Salzsäure tritt für kurze Zeit Lösung ein, dann fällt das Hydrochlorid aus. Nach dem Abkühlen auf 5 °C wird mit 60 Volumenteilen 23-proz. wässriger Natriumnitritlösung diazotiert. Man rührt 2 Stdn. bei Raumtemperatur nach und vernichtet den Nitritüberschuß mit Amidosulfonsäure. Nach der Klärfiltration wird ein Gemisch aus einer Lösung von 30 Teilen 3-Cyan-2,6-dihydroxy-4-methylpyridin in 100 Volumenteilen 2N-Natronlauge, 600 Volumenteilen Wasser und aus 650 Teilen einer 10-proz. alkalisch-wässrigen Lösung von Colophonium zugetropft. Danach wird drei Stunden auf 90 °C erhitzt, abgesaugt und mit heißem Wasser neutral gewaschen. Nach der Trocknung bei 60 °C werden 123 g gelbes Pigment erhalten. Die Verbindung entspricht der Formel

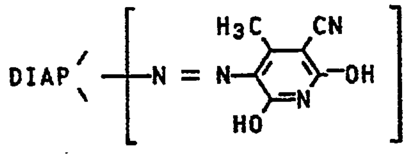

<u>Beispiel 5</u>

44 Teile Dianthranilsäurepiperazid werden in 150 Teilen Wasser unter Zusatz von 0,2 Teilen des Natriumsalzes einer Alkylnaphthalinsulfonsäure angerührt. Nach Zugabe von 150 Volumenteilen konz. Salzsäure wird eine Stunde nachgerührt. Nach dem Abkühlen auf 5 °C wird mit 81 Volumenteilen 23-proz. wässriger Natriumnitritlösung diazotiert. Der Nitritüberschuß wird mit Amidosulfonsäure vernichtet. 63 Teile 3-Cyan-N-hexyl-6-hydroxy-4-methylpyrid-2-on werden in 750 Teilen Wasser unter NaOH-Zusatz bei 50 °C gelöst und filtriert. Nach dem Abkühlen auf Raumtemperatur läßt man die klärfiltrierte Diazoniumsalzlösung einfließen. Bei 50 °C und 95 °C wird je eine Stunde nachgerührt, dann abgesaugt und mit heißem Wasser neutral gewaschen. Nach der Trocknung bei 70 °C erhält man 109 Teile gelbes Pigment. Die Verbindung entspricht der Formel

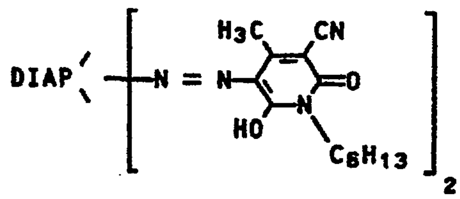

<u>Beispiel 6</u>

32,4 Teile Dianthranilsäurepiperazid werden in 120 Teilen Wasser unter Zusatz von 0,2 Teilen des Natriumsalzes einer Alkylnaphthalinsulfonäure angerührt. Nach Zugabe von 75 Volumenteilen konz. Salzsäure wird eine Stunde nachgerührt. Bei Raumtemperatur wird mit 64 Volumenteilen einer 23-proz. wässrigen Natriumnitritlösung diazotiert, anschließend überschüssiges Nitrit mit Amidosulfonsäure zerstört. 39 Teile N-Butyl-3-cyan-6-hydroxy-4-methylpyrid-2-on und 1,6 Teile 3-Cyan-2,6-dihydroxy-4-methylpyridin werden in 300 Teilen Wasser mit 8 Teilen NaOH gelöst und mit 152 Teilen einer 10-proz. wässrigen Lösung von Colophonium gemischt. Die Diazoniumsalzlösung wird hineinfiltriert. Nach halbstündigem Nachrühren wird pH 1,2 eingestellt und 4 Stunden bei 95 °C gerührt, danach abgesaugt, gewaschen und bei 40 °C getrocknet. Man erhält 92,5 Teile gelbes Pigment. Die Hauptkomponente entspricht der Formel

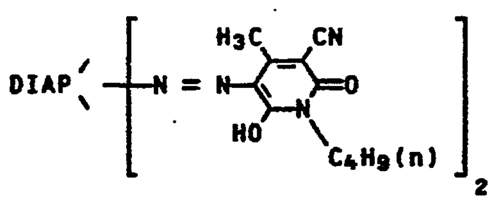

und die wesentliche Nebenkomponente der Formel

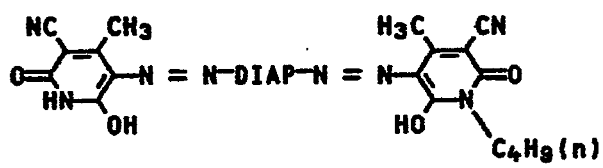

<u>Beispiel 7</u>

172 Teile Piperazin und 968 Teile 5-Bromisatosäureanhydrid werden in 2000 Teilen Dioxan unter Rühren 3 Stunden unter Rüchfluß gekocht. Die Suspension wird mit 500 Teilen Ethanol verdünnt, abgesaugt und der Filterkuchen mit Ethanol, dann Wasser gewaschen, anschließend in 2800 Teilen 10-proz. Salzsäure 4 Stunden bei 95 °C gerührt, abgesaugt, neutral gewaschen und bei 70 °C getrocknet. Ausbeute: 631 Teile, Bromgehalt: 31,6 %.

53,6 Teile der so erhaltenen Diazokomponente werden in 500 Teilen Eisessig aufgekocht und nach dem Abkühlen auf 5 °C mit 58 Teilen Nitrosylschwefelsäure tropfenweise versetzt. Bei Raumtemperatur rührt man 3 Stunden nach, fällt auf Eis aus, zerstört überschüssiges Nitrit durch Zugabe von Harnstoff und läßt die Mischung zur Kupplungskomponente fließen, die wie folgt bereitet wird. 15 Teile 2,6-Dihydroxy-3-cyan-4-methylpyridin werden in Wasser alkalisch gelöst und durch Zugabe von verdünnter Salzsäure bei 0 °C ausgefällt. Die Kupplung wird bei 0 °C und pH 6 zuende geführt. Nach dem Absaugen und Waschen wird das Pigment in Wasser bei pH 10 4 Stunden bei 98 °C gerührt, abgesaugt, neutral gewaschen und getrocknet. Man erhält 80 Teile gelbes Pigment. Die Verbindung entspricht der Formel

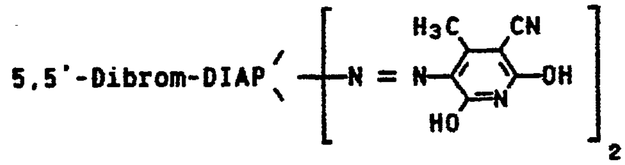

Analog den beschriebenen Verfahren lassen sich auch die weiteren Farbmittel herstellen:

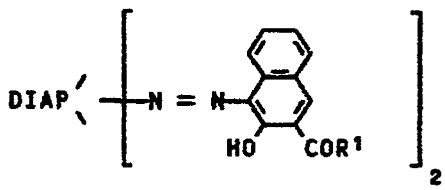

| Beispiel-Nr. | $R^1$ | Farbe |
|---|---|---|
| 8 | $OCH_3$ | rot |
| 9 | $OC_2H_5$ | rot |
| 10 | 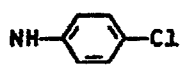 | rot |
| 11 | 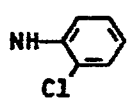 | rot |
| 12 | 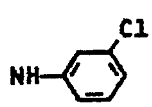 | rot |
| 13 | 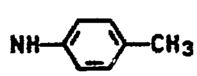 | rot |
| 14 | 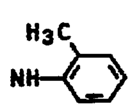 | rot |

| Beispiel-Nr. | $R^1$ | Farbe |
|---|---|---|
| 15 | 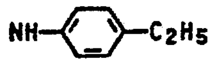 | rot |
| 16 | 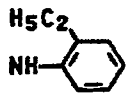 | rot |
| 17 | 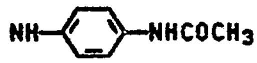 | rot |
| 18 | 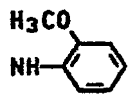 | rot |
| 19 | 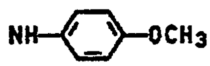 | rot |
| 20 | 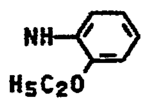 | rot |
| 21 | 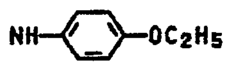 | rot |
| 22 | 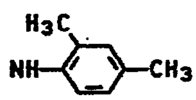 | rot |
| 23 | 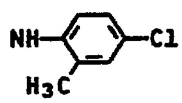 | rot |
| 24 | 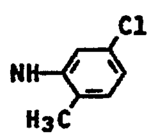 | rot |
| 25 | 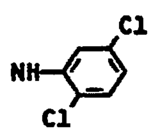 | rot |
| 26 | 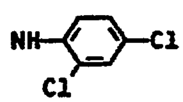 | rot |
| 27 | 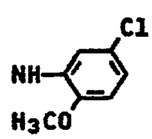 | rot |

| Beispiel-Nr. | $R^1$ | Farbe |
|---|---|---|
| 28 | 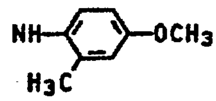 | rot |
| 29 | 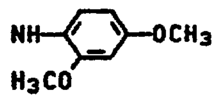 | rot |
| 30 | 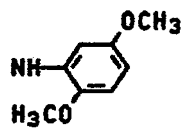 | rot |
| 31 | 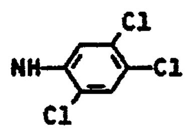 | rot |
| 32 | 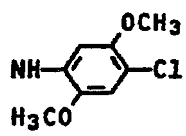 | rot |
| 33 | 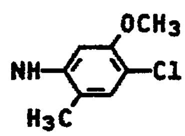 | rot |
| 34 | 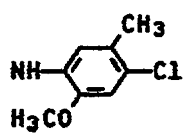 | rot |
| 35 | 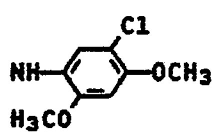 | rot |
| 36 | 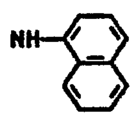 | rot |
| 37 | 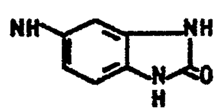 | rot |
| 38 | 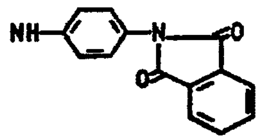 | rot |

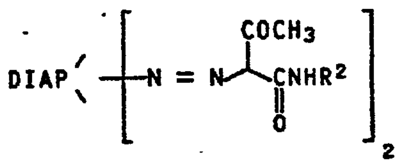

| Beispiel-Nr. | $R^2$ | Farbe |
|---|---|---|
| 39 | 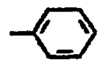 | gelb |
| 40 | 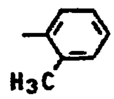 | " |
| 41 | 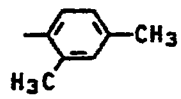 | " |
| 42 | 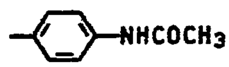 | " |
| 43 | 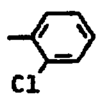 | " |
| 44 | 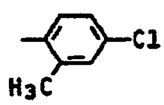 | " |
| 45 | 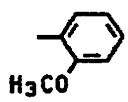 | " |
| 46 | 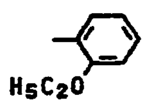 | " |
| 47 | 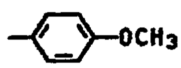 | " |
| 48 | 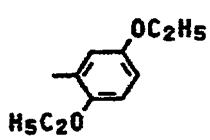 | " |
| 49 | 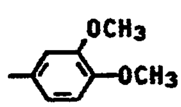 | " |

| Beispiel-Nr. | $R^2$ | Farbe |
|---|---|---|
| 50 | 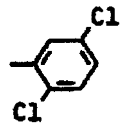 | gelb |
| 51 | 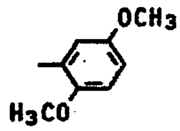 | " |
| 52 | 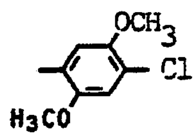 | " |
| 53 | 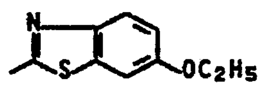 | " |
| 54 | 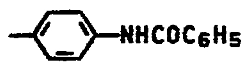 | " |
| 55 | 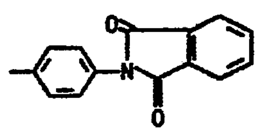 | " |
| 56 | 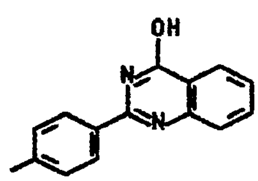 | " |
| 57 | 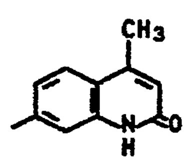 | " |
| 58 | 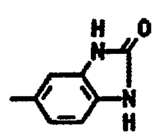 | " |

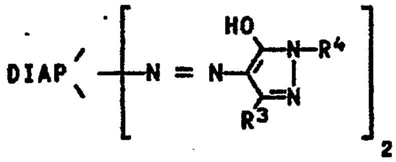

| Beispiel-Nr. | $R^3$ | $R^4$ | Farbe |
|---|---|---|---|
| 59 | $NH_2$ | H | gelb |
| 60 | $CH_3$ | H | gelb |
| 61 | $C_6H_5$ | H | gelb |
| 62 | $C_6H_5$ | $C_6H_5$ | gelb |
| 63 | $CONH_2$ | $C_6H_5$ | gelb |
| 64 | $COOCH_3$ | $C_6H_5$ | gelb |
| 65 | $COOC_2H_5$ | $C_6H_5$ | gelb |

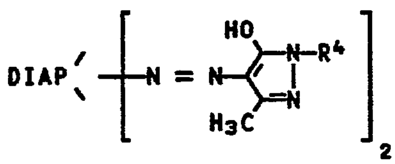

| Beispiel-Nr. | $R^4$ | Farbe |
|---|---|---|
| 66 | 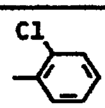 | gelb |
| 67 | 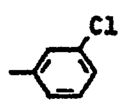 | gelb |
| 68 | 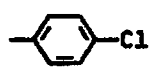 | gelb |
| 69 | 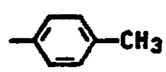 | gelb |
| 70 | 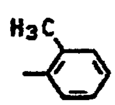 | gelb |

| Beispiel-Nr. | $R^4$ | Farbe |
|---|---|---|
| 71 | 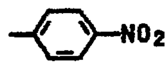 | gelb |
| 72 | 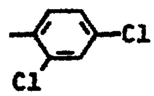 | gelb |
| 73 | 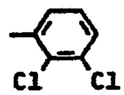 | gelb |
| 74 | 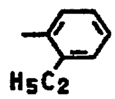 | gelb |
| 75 | 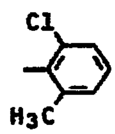 | gelb |
| 76 | 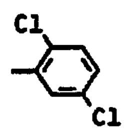 | gelb |
| 77 | 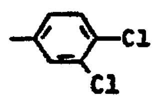 | gelb |
| 78 | 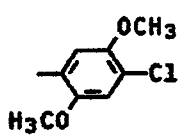 | gelb |
| 79 | 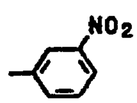 | gelb |
| 80 | 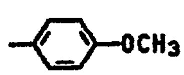 | gelb |
| 81 | 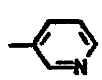 | gelb |
| 82 | 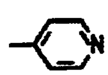 | gelb |

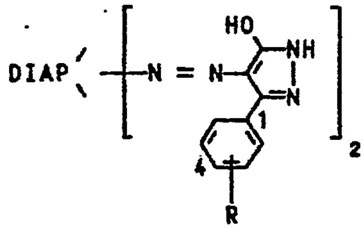

| Beispiel-Nr. | R | Farbe |
|---|---|---|
| 83 | H | gelb |
| 84 | 4-Cl | gelb |
| 85 | 2,4-$Cl_2$ | gelb |
| 86 | 4-$CH_3$ | gelb |
| 87 | 4-$NO_2$ | gelb |
| 88 | 4-$OCH_3$ | gelb |
| 89 | 4-NHC$CH_3$<br>‖<br>O | gelb |
| 90 | 4-NHC$C_6H_5$<br>‖<br>O | gelb |
| 91 | 2,5-$(OCH_3)_2$ | gelb |
| 92 | 2,5-$Cl_2$ | gelb |

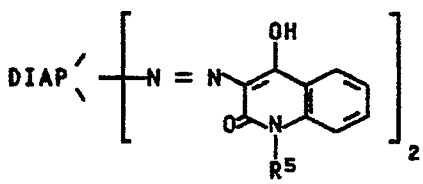

| Beispiel-Nr. | $R^5$ | Farbe |
|---|---|---|
| 93 | H | gelb |
| 94 | $CH_3$ | gelb |
| 95 | $C_2H_5$ | gelb |
| 96 | $C_3H_7$(n) | gelb |
| 97 | CH<br>/ $CH_3$<br>\ $CH_3$ | gelb |
| 98 | $C_4H_9$(n) | gelb |

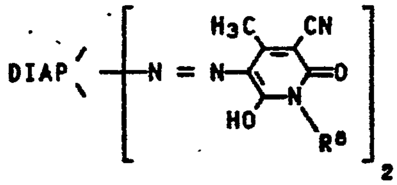

| Beispiel-Nr. | $R^8$ | Farbe |
|---|---|---|
| 99 | $-CH_3$ | gelb |
| 100 | $-C_2H_5$ | gelb |
| 101 | $-C_3H_7(n)$ | gelb |
| 102 | 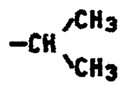 | gelb |
| 103 | $-C_4H_9(n)$ | gelb |
| 104 | $-CH_2CH(CH_3)_2$ | gelb |
| 105 | $-CH(CH_3)C_2H_5$ | gelb |
| 106 | $-C_5H_{11}(n)$ | gelb |
| 107 | $-CH(C_2H_5)_2$ | gelb |
| 108 | $-C_2H_4CH(CH_3)_2$ | gelb |
| 109 | $-CH_2C(CH_3)_3$ | gelb |
| 110 | 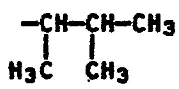 | gelb |
| 111 | $-C(CH_3)_2C_2H_5$ | gelb |
| 112 | 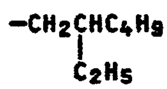 | gelb |
| 113 | 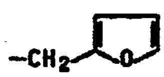 | gelb |
| 114 | 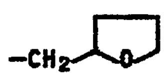 | gelb |
| 115 | 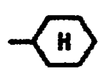 | gelb |
| 116 | 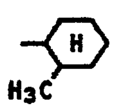 | gelb |

| Beispiel-Nr. | $R^8$ | Farbe |
|---|---|---|
| 117 | 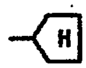 | gelb |
| 118 | $-CH_2-C_6H_5$ | gelb |
| 119 | $-CH(CH_3)C_6H_5$ | gelb |
| 120 | $-CH(CH_3)C_2H_4C_6H_5$ | gelb |
| 121 | $-C_6H_5$ | gelb |
| 122 | $-C_8H_{17}(n)$ | gelb |
| 123 | $-C_{10}H_{21}$ | gelb |
| 124 | $-C_{12}H_{25}$ | gelb |
| 125 | $-C_{14}H_{29}$ | gelb |
| 126 | $-C_{16}H_{33}$ | gelb |
| 127 | $-C_{18}H_{37}$ | gelb |
| 128 | $-C_{20}H_{41}$ | gelb |
| 129 | $-C_7H_{15}$ | gelb |
| 130 | $-C_{13}H_{17}$ (Isomerengemisch) | gelb |
| 131 | $-C_9H_{19}$ (Isomerengemisch) | gelb |
| 132 | $-C_{18}H_{35}$ | gelb |
| 133 | $-C_{16}H_{31}$ | gelb |
| 134 | $-C_2H_4OH$ | gelb |
| 135 | $-C_2H_4OCH_3$ | gelb |
| 136 | $-C_2H_4OC_2H_5$ | gelb |
| 137 | $-C_3H_6OH$ | gelb |
| 138 | $-C_3H_6OC_2H_4OH$ | gelb |
| 139 | $-CH_2CH(CH_3)OH$ | gelb |
| 140 | $-C_3H_6OC_2H_5$ | gelb |
| 141 | $-CH(C_2H_5)CH_2OH$ | gelb |
| 142 | $-CH(CH_3)CH_2OH$ | gelb |
| 143 | $-C_3H_6OCH_3$ | gelb |
| 144 | $-C_3H_6OC_9H_{19}(iso)$ | gelb |
| 145 | $-CH_2C(CH_3)_2CH_2OH$ | gelb |

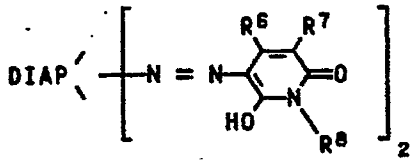

| Beispiel-Nr. | $R^6$ | $R^7$ | $R^8$ | Farbe |
|---|---|---|---|---|
| 146 | $CH_3$ | $CONH_2$ | $-H$ | gelb |
| 147 | $CH_3$ | $CONH_2$ | $-CH_3$ | gelb |
| 148 | $CH_3$ | $CONH_2$ | $-C_2H_5$ | gelb |
| 149 | $CH_3$ | $CONH_2$ | $-C_3H_7(n)$ | gelb |
| 150 | $CH_3$ | $CONH_2$ | $-CH(CH_3)(CH_3)$ | gelb |
| 151 | $CH_3$ | $CONH_2$ | $-C_4H_9(n)$ | gelb |
| 152 | $CH_3$ | $CONH_2$ | $-CH_2CH_2(CH_3)(CH_3)$ | gelb |
| 153 | $CH_3$ | $CONH_2$ | $-CH(CH_3)(C_2H_5)$ | gelb |
| 154 | $CH_3$ | $CONH_2$ | $-C_5H_{11}(n)$ | gelb |
| 155 | $CH_3$ | $CONH_2$ | $-C_2H_5CH(CH_3)(CH_3)$ | gelb |
| 156 | $CH_3$ | $CONH_2$ | $-C_6H_{13}(n)$ | gelb |
| 157 | $CH_3$ | $CONH_2$ | $-C_8H_{17}(n)$ | gelb |
| 158 | $CH_3$ | $CONH_2$ | $-CH_2CH(C_2H_5)C_4H_9$ | gelb |
| 159 | $CH_3$ | H | $-H$ | gelb |
| 160 | $CH_3$ | H | $-CH_3$ | gelb |
| 161 | $CH_3$ | H | $-C_2H_5$ | gelb |
| 162 | $CH_3$ | H | $-C_3H_7(n)$ | gelb |
| 163 | $CH_3$ | H | $-CH(CH_3)(CH_3)$ | gelb |
| 164 | $CH_3$ | H | $-C_4H_9(n)$ | gelb |
| 165 | $CH_3$ | H | $-C_6H_{13}$ | gelb |

| Beispiel-Nr. | $R^6$ | $R^7$ | $R^8$ | Farbe |
|---|---|---|---|---|
| 166 | $CH_3$ | $COCH_3$ | $-H$ | gelb |
| 167 | $CH_3$ | $COCH_3$ | $-CH_3$ | gelb |
| 168 | $CH_3$ | $COCH_3$ | $-C_2H_5$ | gelb |
| 169 | $CH_3$ | $COCH_3$ | $-C_3H_7(n)$ | gelb |
| 170 | $CH_3$ | $COCH_3$ | $-CH(CH_3)_2$ | gelb |
| 171 | $CH_3$ | $COCH_3$ | $-C_4H_9(n)$ | gelb |
| 172 | $CH_3$ | $COCH_3$ | $-C_6H_{13}$ | gelb |
| 173 | $CONH_2$ | H | $-H$ | gelb |
| 174 | OH | CN | $-H$ | gelb |
| 175 | OH | $CONH_2$ | $-H$ | gelb |
| 176 | H | CN | $-H$ | gelb |
| 177 | H | CN | $-CH_3$ | gelb |
| 178 | H | CN | $-C_2H_5$ | gelb |
| 179 | H | CN | $-C_3H_7$ | gelb |
| 180 | H | CN | $-CH(CH_3)_2$ | gelb |
| 181 | H | CN | $-C_4H_9$ | gelb |
| 182 | H | $COCH_3$ | $-H$ | gelb |
| 183 | H | $COCH_3$ | $-CH_3$ | gelb |
| 184 | H | $COCH_3$ | $-C_2H_5$ | gelb |
| 185 | H | $COCH_3$ | $-C_3H_7$ | gelb |
| 186 | H | $COCH_3$ | $-CH(CH_3)_2$ | gelb |
| 187 | H | $COCH_3$ | $-C_4H_9$ | gelb |
| 188 | H | $CONH_2$ | $-H$ | gelb |
| 189 | H | $CONH_2$ | $-CH_3$ | gelb |
| 190 | H | $CONH_2$ | $-C_2H_5$ | gelb |
| 191 | H | $CONH_2$ | $-C_3H_7$ | gelb |
| 192 | H | $CONH_2$ | $-CH(CH_3)_2$ | gelb |
| 193 | H | $CONH_2$ | $-C_4H_9$ | gelb |

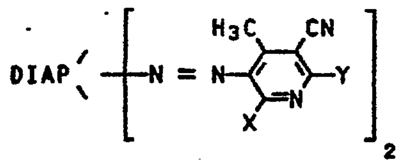

| Beispiel-Nr. | X | Y | Farbe |
|---|---|---|---|
| 194 | HO | $NH_2$ | gelb |
| 195 | HO | $NHCH_3$ | gelb |
| 196 | $NH_2$ | $NH_2$ | orange |
| 197 | $NHCH_3$ | $NHCH_3$ | orange |
| 198 | $NH_2$ | $NHCH_3$ | orange |
| 199 | $NHC_2H_5$ | $NHC_2H_5$ | orange |
| 200 | $NH_2$ | $NHC_2H_5$ | orange |
| 201 | $NHC_6H_5$ | $NHC_6H_5$ | orange |
| 202 | $NH_2$ | $NHC_6H_5$ | orange |

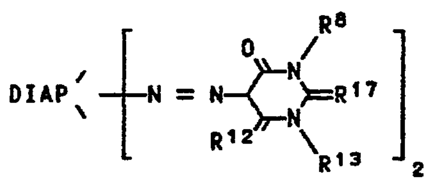

| Beispiel-Nr. | $R^8$ | $R^{12}$ | $R^{13}$ | $R^{17}$ | Farbe |
|---|---|---|---|---|---|
| 203 | H | O | H | O | gelb |
| 204 | H | NH | H | O | gelb |
| 205 | H | NH | H | NH | gelb |
| 206 | H | NH | H | NCN | gelb |
| 207 | H | O | H | NH | gelb |
| 208 | H | O | $CH_3$ | O | gelb |
| 209 | H | O | $C_2H_5$ | O | gelb |
| 210 | $CH_3$ | O | $CH_3$ | O | gelb |
| 211 | $CH_3$ | O | $C_6H_5$ | O | gelb |
| 212 | $C_6H_5$ | O | $C_6H_5$ | O | gelb |

| Beispiel-Nr. | $R^8$ | $R^{12}$ | $R^{13}$ | $R^{17}$ | Farbe |
|---|---|---|---|---|---|
| 213 | H | O | $C_6H_5$ | O | gelb |
| 214 | $CH_3$ | O | $CH_3$ | NH | gelb |
| 215 | H | O | 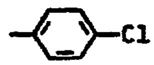 | O | gelb |
| 216 | H | O | 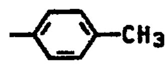 | O | gelb |

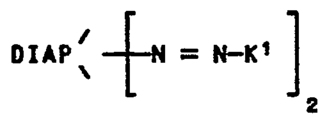

| Beispiel-Nr. | $K^1H$ | Farbe |
|---|---|---|
| 217 | 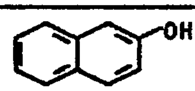 | rot |
| 218 | 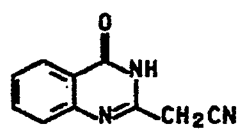 | gelb |
| 219 | 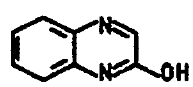 | gelb |
| 220 | 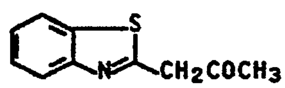 | gelb |
| 221 | 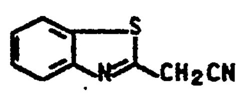 | gelb |
| 222 | 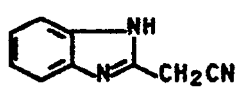 | gelb |
| 223 | 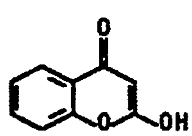 | gelb |
| 224 | 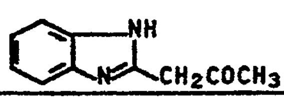 | gelb |

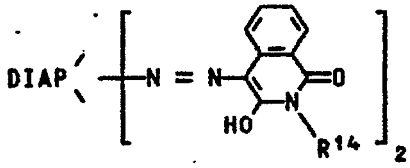

| Beispiel-Nr. | $R^{14}$ | Farbe |
|---|---|---|
| 225 | H | gelb |
| 226 | $CH_3$ | gelb |
| 227 | $C_2H_5$ | gelb |
| 228 | $C_3H_7$ | gelb |
| 229 | $CH(CH_3)_2$ | gelb |
| 230 | $C_4H_9$ | gelb |
| 231 | $NHC_6H_5$ | gelb |
| 232 | 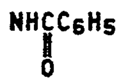 | gelb |
| 233 | 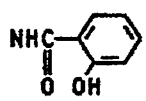 | gelb |

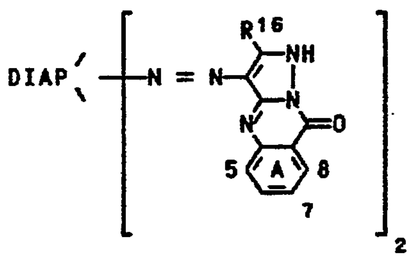

| Beispiel-Nr. | A | $R^{16}$ | Farbe |
|---|---|---|---|
| 234 | 7-Cl | $CH_3$ | gelb |
| 235 | 7-Br | $CH_3$ | gelb |
| 236 | 5,7-$Cl_2$ | $CH_3$ | gelb |
| 237 | 7-Cl, 5-Br | $CH_3$ | gelb |
| 238 | 5,7-$Br_2$ | $CH_3$ | gelb |

| Beispiel-Nr. | A | $R^{16}$ | Farbe |
|---|---|---|---|
| 239 | 5-Cl | $CH_3$ | gelb |
| 240 | 7-Br, 5-Cl | $CH_3$ | gelb |
| 241 | 8-Cl | $CH_3$ | gelb |
| 242 | 7-Cl | $C_6H_5$ | gelb |
| 243 | 7-Br | $C_6H_5$ | gelb |
| 244 | 5-Cl | $C_6H_5$ | gelb |
| 245 | 5,7-$Cl_2$ | $C_6H_5$ | gelb |
| 246 | 5,7-$Br_2$ | $C_6H_5$ | gelb |
| 247 | 8-Cl | $C_6H_5$ | gelb |
| 248 | H | $CH_3$ | gelb |
| 249 | H | $C_6H_5$ | gelb |

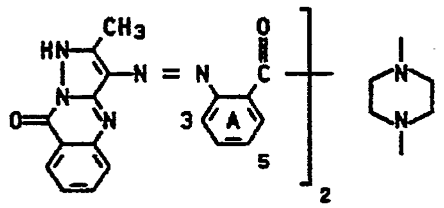

| Beispiel-Nr. | A | Farbe |
|---|---|---|
| 250 | 5-Cl | gelb |
| 251 | 5-Br | gelb |
| 252 | 3,5-$Cl_2$ | gelb |
| 253 | 3,5-Br | gelb |
| 254 | 3-Cl, 5-Br | gelb |
| 255 | 3-Br, 5-Cl | gelb |

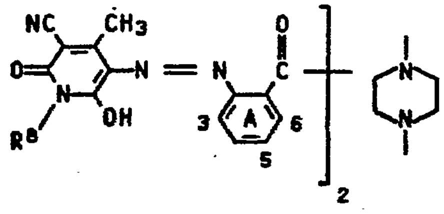

| Beispiel-Nr. | A | $R^8$ | Farbe |
|---|---|---|---|
| 256 | 5-Cl | H | gelb |
| 257 | 5-Cl | $CH_3$ | gelb |
| 258 | 5-Cl | $C_2H_5$ | gelb |
| 259 | 5-Cl | $C_3H_7$ | gelb |
| 260 | 5-Cl | $CH(CH_3)_2$ | gelb |
| 261 | 5-Cl | $C_4H_9$ | gelb |
| 262 | 5-Br | $CH_3$ | gelb |
| 263 | 5-Br | $C_2H_5$ | gelb |
| 264 | 5-Br | $C_3H_7$ | gelb |
| 265 | 5-Br | $CH(CH_3)_2$ | gelb |
| 266 | 5-Br | $C_4H_9$ | gelb |
| 267 | $5-NO_2$ | H | gelb |
| 268 | $5-NO_2$ | $CH_3$ | gelb |
| 269 | $5-NO_2$ | $C_2H_5$ | gelb |
| 270 | $5-NO_2$ | $C_3H_7$ | gelb |
| 271 | $5-NO_2$ | $CH(CH_3)_2$ | gelb |
| 272 | $5-NO_2$ | $C_4H_9$ | gelb |
| 273 | $3,5-Br_2$ | H | gelb |
| 274 | $3,5-Br_2$ | $CH_3$ | gelb |
| 275 | $3,5-Br_2$ | $C_2H_5$ | gelb |
| 276 | $3,5-Br_2$ | $C_3H_7$ | gelb |
| 277 | $3,5-Br_2$ | $CH(CH_3)_2$ | gelb |

| Beispiel-Nr. | A | $R^8$ | Farbe |
|---|---|---|---|
| 278 | 3,5-$Br_2$ | $C_4H_9$ | gelb |
| 279 | 3,5-$Cl_2$ | H | gelb |
| 280 | 3,5-$Cl_2$ | $CH_3$ | gelb |
| 281 | 3,5-$Cl_2$ | $C_2H_5$ | gelb |
| 282 | 3,5-$Cl_2$ | $C_3H_7$ | gelb |
| 283 | 3,5-$Cl_2$ | $CH(CH_3)_2$ | gelb |
| 284 | 3,5-$Cl_2$ | $C_4H_9$ | gelb |
| 285 | 3-Cl, 5-Br | H | gelb |
| 286 | 3-Cl, 5-Br | $CH_3$ | gelb |
| 287 | 3-Cl, 5-Br | $C_2H_5$ | gelb |
| 288 | 3-Cl, 5-Br | $C_3H_7$ | gelb |
| 289 | 3-Cl, 5-Br | $CH(CH_3)_2$ | gelb |
| 290 | 3-Cl, 5-Br | $C_4H_9$ | gelb |
| 291 | 3-Br, 5-Cl | H | gelb |
| 292 | 3-Br, 5-Cl | $CH_3$ | gelb |
| 293 | 3-Br, 5-Cl | $C_2H_5$ | gelb |
| 294 | 3-Br, 5-Cl | $C_3H_7$ | gelb |
| 295 | 3-Br, 5-Cl | $CH(CH_3)_2$ | gelb |
| 296 | 3-Br, 5-Cl | $C_4H_9$ | gelb |
| 297 | 6-Cl | H | gelb |
| 298 | 6-Cl | $CH_3$ | gelb |
| 299 | 6-Cl | $C_2H_5$ | gelb |
| 300 | 6-Cl | $C_3H_7$ | gelb |
| 301 | 6-Cl | $CH(CH_3)_2$ | gelb |
| 302 | 6-Cl | $C_4H_9$ | gelb |

Beispiel 303

162 Teile Dianthranilsäurepiperazid werden in 500 Teilen Wasser unter Zusatz von 0,5 Teilen Natrium-Alkylnaphthalinsulfonat einige Stunden angerührt. Nach Zugabe von 275 ml konz. HCl wird 1/2 Stunde gerührt, dann gibt man Eis zu und diazotiert mit 310 Volumenteilen 23 proz. wäßriger Natriumnitritlösung bei 0 bis 5°C. Nach 1 1/2 Stunden wird der Nitritüberschuß mit Amidosulfonsäure zerstört und die Lösung filtriert.

41,4 Teile 3-Cyan-6-hydroxy-1,4-dimethylpyrid-2-on werden unter Erwärmen in einer Mischung aus 100 Teilen 2N Natronlauge und 600 Teilen Wasser gelöst. Bei Raumtemperatur gibt man 500 Teile einer 10 proz. natronalkalischen, wäßrigen Lösung von Kolophonium zu und versetzt tropfenweise mit einer Lösung von 2,9 Teilen 3-Cyan-6-hydroxy-4-methyl-1-(γ-trimethylammoniumpropyl)-pyrid-2-on in 10 Teilen Eisessig. Zu 85 % dieser Suspension läßt man die Diazoniumsalzlösung unter gutem Rühren zufließen und titriert innerhalb 1/2 Stunde mit den restlichen 15 % der Kupplungskomponente bis zu einem geringen Überschuß an Diazokomponente. Nach 10 Minuten wird mit 50 proz. wäßriger Natronlauge pH 12 eingestellt, 5 Minuten nachgerührt und mit 30 Teilen Ameisensäure angesäuert. Mit Natronlauge wird danach pH 9 eingestellt und 4 Stunden bei 98°C gerührt. Mit verd. Salzsäure wird dann pH 5 eingestellt und nach der Abkühlung auf 50°C abgesaugt, mit Wasser salzfrei gewaschen und bei 50°C getrocknet. Man erhält 117 Teile gelbes Pigment. Die Hauptkomponente entspricht der Formel

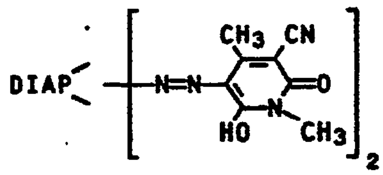

und die Nebenkomponenten den Formeln

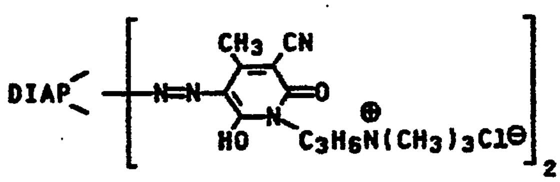

und

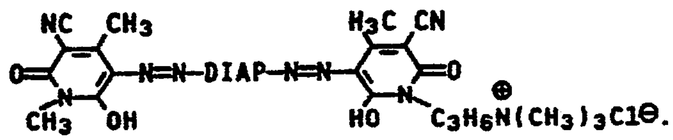

Die in der folgenden Tabelle angegebenen Neben-Kupplungskomponenten können bei der Herstellung der Pigmente, auch kombiniert mit anderen Hauptkupplungskomponenten, analog eingesetzt werden. Es können aber auoh die reinen Farbstoffe DIAP→(Nebenkupplungskomponente 1. Nebenkupplungskomponente 2) hergestellt und vor der zum Pigment führenden Hauptkupplung oder danach zugesetzt werden.

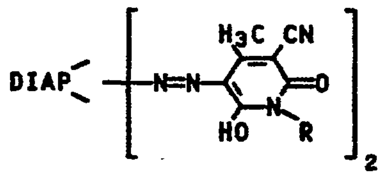

| Beispiel-Nr. | R | Farbe |
|---|---|---|
| 304 | $C_2H_4N(CH_3)_2$ | gelb |
| 305 | $C_2H_4N(C_2H_5)_2$ | gelb |
| 306 | $C_2H_4N(\underset{CH_3}{CH}CH_3)_2$ | gelb |
| 307 | $C_2H_4N(C_4H_9)_2$ | gelb |
| 308 | $C_2H_4N$ 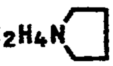 | gelb |
| 309 | $C_3H_6N(CH_3)_2$ | gelb |
| 310 | $C_3H_6N(C_2H_5)_2$ | gelb |
| 311 | $C_3H_6N(C_3H_7)_2$ | gelb |
| 312 | $C_3H_6N(CH(CH_3)_2)_2$ | gelb |
| 313 | $C_3H_6N(C_4H_9)_2$ | gelb |
| 314 | $C_3H_6NH$– 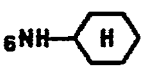 | gelb |
| 315 | $C_3H_6NH$ 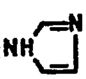 | gelb |
| 316 | $C_3H_6N$ 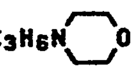 | gelb |
| 317 | $C_3H_6N$ 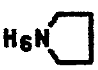 | gelb |
| 318 | $C_3H_6N$ 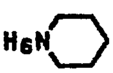 | gelb |
| 319 | $C_3H_6NH$–$CH_2$– 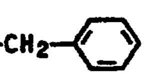 | gelb |
| 320 | $C_3H_6NHC_{12}H_{25}$ | gelb |
| 321 | $C_3H_6NH$–kokos ($C_8$, $C_{10}$, $C_{12}$, $C_{12}$, $C_{16}$, $C_{18}$) | gelb |

| Beispiel-Nr. | R | Farbe |
|---|---|---|
| 322 | $C_3H_6NH$-Talgfett ($C_{14}$, $C_{16}$, $C_{18}$) | gelb |
| 323 | $C_3H_6NH$–Oleyl ($C_{14}$, $C_{16}$, $C_{18}$) | gelb |
| 324 | $C_3H_6\overset{\oplus}{N}(CH_3)_3$ | gelb |
| 325 | $C_3H_6\overset{\oplus}{N}(CH_3)_2(C_2H_4OH)$ | gelb |
| 326 | $C_3H_6\overset{\oplus}{N}(CH_3)(C_2H_5)_2$ | gelb |
| 327 | 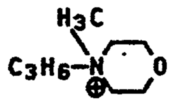 | |
| 328 | 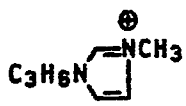 | |

Verwendungsbeispiele

a) Lack

10 Teile des nach Beispiel 20 erhaltenen Farbmittels und 95 Teile Einbrennlackmischung, die 70 % Kokosalkydharz (60 %ig in Xylol gelöst) und 30 % Melaminharz (ungefähr 55 %ig gelöst in Butanol/Xylol) enthält, werden in einem Attritor angerieben. Nach dem Auftragen und einer Einbrennzeit von 30 Minuten bei 120 °C werden rote Volltonlackierungen mit guter Farbstärke und Lichtechtheit erhalten. Durch Zumischen von Titandioxyd werden rote Weißaufhellungen erhalten.

Verwendet man die Beispielen 1 - 302 beschriebenen Farbmittel, so werden Lackierungen mit teilweise hohen Farbstärken erhalten.

b) Kunststoff (Weich-PVC) .

0,05 Teile Farbmittel, erhalten nach Beispiel 99, werden mit 50 Teilen einer Mischung aus 65 Teilen PVC-Pulver, 36 Teilen
Di-ethylhexyl-phthalat und 2 Teilen
Dibutyl-Zinn-bis-thioglykolsäure-hexylester auf einem Mischwalzwerk bei 150 °C - 160 °C ca. 8 Minuten homogenisiert, zu Fellen gewalzt und auf einem Kalander-Walzwerk geglättet. Man erhält gelbe Felle mit guter Lichtechtheit und Weichmacherechtheit. Gibt man bei der Einarbeitung Titanoxid zu, so erhält man gelbe Verschnitte von guter Farbstärke.

Verwendet man die Pigmentfarbstoffe, die nach Beispielen 1 - 302 erhalten werden, so erhält man analoge Färbungen.

c) Druckfarbe

8 Teile des nach Beispiel 1 erhaltenen Pigmentfarbstoffes, 40 Teile eines mit Phenol/Formaldehyd modifizierten Colophoniumharzes und 55 bis 65 Toluol werden in einem Dispergieraggregat innig vermischt. Man erhält eine gelbe Toluol-Tiefdruckfarbe. Die mit dieser Farbe erhaltenan Drucke weisen eine gute Farbstärke auf.

Bei Verwendung der Farbmittel aus den Beispielen 2 - 302 werden ähnliche Ergebnisse erhalten.

## Patentansprüche

1. Sulfonsäuregruppenfreie Verbindungen der allgemeinen Formel I

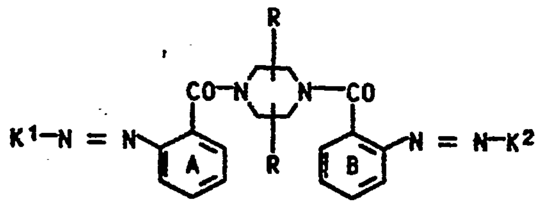

(I)

in der
R Wasserstoff oder $C_1$- bis $C_4$-Alkyl und
$K^1$ und $K^2$ unabhängig voneinander Reste von Kupplungskomponenten sind und in der die Ringe A und B noch ein- oder mehrfach durch Fluor, Chlor, Brom, Nitro, Methyl, Trifluormethyl, Ethyl, Acetyl, Benzoyl, Carbonester, gegebenenfalls substituiertes Carbamoyl oder Sulfamoyl, Sulfonsäurearylester, $C_1$ bis $C_4$-Alkylsulfonyl, gegebenenfalls substituiertes Phenylsulfonyl, Cyan oder Acylamino oder einen anellierten Ring substituiert sein können.

2. Verbindungen gemäß 1 der Formel

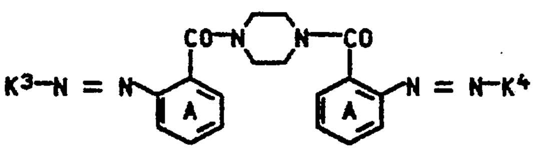

(Ia)

in der
$K^3$ und $K^4$ unabhängig voneinander Reste von Kupplungskomponenten der Acetoacetarylid-, Pyrazolon-, Chinolon-, Pyrimidin-, Isochinolon- oder Pyrazolo [5,1b]-chinazolonreihe oder des 2-Naphthols und insbesondere Reste der Pyridin-oder 2-Naphthol-3-carbonsäurearylamidreihe sind, und die Phenylenreste A noch durch Chlor, Brom oder Nitro einfach oder mehrfach, auch gemischt, substituiert sein können.

3. Verwendung der Verbindungen gemäß Anspruch 1 als Pigmente in Druckfarben, Anstrichmittel oder Kunststoffen.

## Claims

1. A sulfo-free compound of the formula I

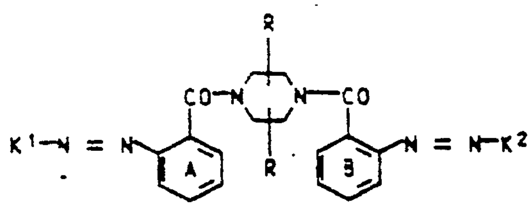

where
R is hydrogen or $C_1$-$C_4$-alkyl and
$K^1$ and $K^2$ independently of one another are a radical of a coupling component, and the rings A and B may furthermore be monosubstituted or polysubstituted by fluorine, chlorine, bromine, nitro, methyl, trifluoromethyl, ethyl, acetyl, benzoyl, a carboxylic ester group, unsubstituted or substituted carbamyl or sulfamyl, an aryl sulfonate group, $C_1$–$C_4$-alkylsulfonyl, unsubstituted or substituted phenylsulfonyl, cyano or acylamino or a fused ring.

2. A compound as claimed in claim 1, of the formula

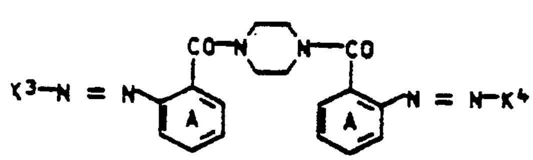

where
$K^3$ and $K^4$ independently of one another are each radical of a coupling component of the acetoacetarylide, pyrazolone, quinolone, pyrimidine, isoquinolone or pyrazolo[5,1-b]quinazolone series or of 2-naphthol and in particular a radical of the pyridine or 2-naphthol-3-carboxylic acid arylamide series, and the phenylene radicals A may be monosubstituted or polysubstituted by chlorine, bromine or nitro, the substituents being identical or different in the case of polysubstitution.

3. The use of the compound as claimed in claim 1 as pigment for coloring printing inks, surface coatings or plastics.

**Revendications**

1. Composés exempts de groupement acide sulfonique de formule générale I

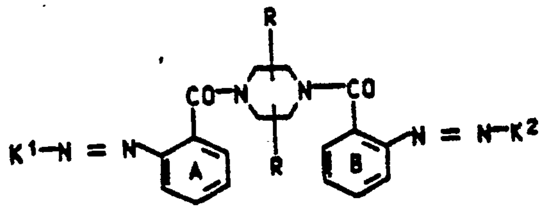

(I)

dans laquelle
R est un atome d'hydrogène ou un reste alkyle en $C_1$–$C_4$, et
$K^1$ et $K^2$ sont, indépendamment l'un de l'autre, des restes de composants de copulation, et dans laquelle les noyaux A et B peuvent être substitués une ou plusieurs fois par de radicaux fluoro, chloro, bromo, nitro, méthyle, trifluorométhyle, éthyle, acétyle, benzoyle, ester carboxylique, carbamoyle ou sulfamoyle éventuellement substitué, sulfonate d'aryle, alkylsulfonyle en $C_1$–$C_4$, phénylsulfonyle éventuellement substitué, cyano ou acylamino ou par un noyau condensé.

2. Composés selon la revendication 1 de formule

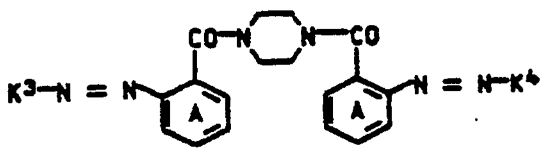

(Ia)

dans laquelle
$K^3$ et $K^4$ sont, indépendamment l'un de l'autre, des restes de composants de copulation de la série des acétoacétarylide, pyrazolone, quinolone, pyrimidine, isoquinolone ou pyrazolo[5,1-b]quinazolone ou du 2-naphtol, et en particulier des restes de la série des pyridine- ou 2-naphtol-3-carboxarylamide, et les restes phénylène A peuvent être substitués encore par un ou plusieurs radicaux chloro, bromo ou nitro, éventuellement en mélange.

3. Utilisation des composés selon la revendication 1, comme pigments pour colorants d'impression, peintures et matières plastiques.